# FASCICULE DE BREVET EUROPEEN

(11) **EP 2 931 655 B1**
(45) Date de publication et mention de la délivrance du brevet: **06.07.2016**
(21) Numéro de dépôt: 13805448.1
(22) Date de dépôt: 31.10.2013
(51) Int. Cl.: C01B 3/48, C01B 3/56

(54) **PROCÉDÉ POUR UNE PRODUCTION D'HYDROGÈNE PAR REFORMAGE D'HYDROCARBURES UTILISANT DE LA VAPEUR, ASSOCIÉ À UNE CAPTURE DE DIOXYDE DE CARBONE ET À UNE PRODUCTION DE VAPEUR**
VERFAHREN ZUR HERSTELLUNG VON WASSERSTOFF DURCH REFORMIEREN VON KOHLENWASSERSTOFFEN MIT WASSERDAMPF, KOMBINIERT MIT KOHLENDIOXIDERFASSUNG UND DAMPFERZEUGUNG
METHOD FOR PRODUCING HYDROGEN BY REFORMING HYDROCARBONS USING STEAM, COMBINED WITH CARBON DIOXIDE CAPTURE AND STEAM PRODUCTION

(30) Priorité: 13.12.2012 FR 1262002
(43) Date de publication de la demande: 21.10.2015
(73) Titulaire: L'Air Liquide Société Anonyme pour l'Etude et l'Exploitation des Procédés Georges Claude, 75007 Paris (FR)
(72) Inventeur: DARDE, Arthur, F-75005 Paris (FR); LECLERC, Mathieu, F-75020 Paris (FR); MOREL, Thomas, F-94360 Bry sur Marne (FR)
(74) Mandataire: Conan, Philippe Claude
(86) Numéro de dépôt international: PCT/FR2013/052613
(87) Numéro de publication internationale: WO 2014/091098

(56) Documents cités:
- WO-A1-2006/054008
- WO-A1-2006/097703
- FR-A1- 2 961 802
- US-A1- 2009 230 359
- US-A1- 2010 104 499
- US-A1- 2011 085 967
- US-A1- 2011 146 991

## Description

La présente invention est relative à une production d'hydrogène avec capture de CO₂.

Plus précisément, elle concerne un procédé de production d'hydrogène par reformage d'hydrocarbures utilisant de la vapeur, associé à une capture de dioxyde de carbone et à une production de vapeur, en particulier reformage à la vapeur ainsi que reformage autothermique, dans lequel on réalise un mélange des hydrocarbures à reformer avec de la vapeur pour produire la charge d'alimentation du reformage, on génère un gaz de synthèse comprenant essentiellement de l'hydrogène, du monoxyde de carbone, du dioxyde de carbone, ainsi que de la vapeur en excès, du méthane résiduel, de l'eau et des impuretés; le gaz de synthèse produit est refroidi, enrichi en H₂ et CO₂ par conversion du CO à la vapeur (réaction de « shift ») ; le gaz de synthèse enrichi est refroidi par échange de chaleur indirect avec des fluides du procédé de sorte à produire un gaz de synthèse saturé en eau et des condensats de procédé qui sont séparés du gaz de synthèse pour être utilisés dans le procédé, le gaz de synthèse saturé étant traité par adsorption à modulation de pression pour produire de l'hydrogène et un résiduaire gazeux contenant du CO₂ qui est capturé dans une unité de purification de CO₂.

Les condensats de procédé - c'est-à-dire les condensats issus du refroidissement du gaz de synthèse en sortie de réacteur de shift - peuvent être utilisés dans le procédé lui-même selon deux modes.
- Le premier mode d'utilisation met en oeuvre un stripeur de condensats ; les condensats de procédé sont traités par entrainement à la vapeur dans une colonne appelée stripeur, la vapeur chargée en impuretés en résultant étant recyclée avec un complément de vapeur de haute pureté au point de mélange (en langue anglaise « mixing point ») des hydrocarbures avec la vapeur tandis que les condensats purifiés sont utilisés pour produire de la vapeur de haute pureté via la chaudière de récupération de chaleur (en langue anglaise « waste heat boiler ») du procédé à la fois pour fournir le complément de vapeur pour le point de mélange et pour fournir de la vapeur d'export pure.
- Le second mode d'utilisation des condensats ne fait pas appel à l'entrainement à la vapeur des condensats ; les condensats de procédé sont mélangés avec de l'eau déminéralisée en appoint puis sont vaporisés puis surchauffés dans la chaudière de récupération de chaleur générant ainsi de la vapeur impure pour alimenter le point de mélange en vapeur de procédé ;
   - selon une première variante dans laquelle on souhaite produire de la vapeur d'exportation de haute pureté, celle-ci est traitée dans un circuit - distinct du circuit de production de la vapeur impure - où de l'eau déminéralisée est vaporisée, puis la vapeur est chauffée, selon les cas surchauffée, par échange de chaleur avec des fluides chauds du procédé (ou associés au procédé). Elle est envoyée pour partie en complément de vapeur au point de mélange et pour partie exportée ;
   - selon une deuxième variante, mise en oeuvre dans le cas où la vapeur d'exportation peut être de la vapeur impure, les condensats de procédé sont mélangés avec la totalité de l'eau déminéralisée, vaporisés conjointement dans la chaudière de récupération de chaleur, la vapeur étant chauffée, selon les cas surchauffée, par échange de chaleur avec des fluides chauds du procédé (ou associés au procédé) ; une partie de la vapeur impure générée est envoyée au point de mélange, la vapeur en excès est exportée.

Le terme « vapeur de haute pureté » tel qu'utilisé dans la description et dans les revendications signifie de la vapeur contenant moins de 50 ppmv d'oxygène, 50 ppmv de dioxyde de carbone, 50 ppmv de méthanol, 50 ppmv d'amines et 50 ppmv d'ammoniac.

Le terme « condensats de procédés » tel qu'utilisé dans la description et dans les revendications signifie les condensats constitués par la phase aqueuse obtenue à partir du gaz de synthèse, lors de son refroidissement final à l'issue de l'étape de conversion (shift), et récupérée par séparation.

L'invention s'applique dans le cadre de procédés de reformage à la vapeur, notamment de reformage de méthane à la vapeur grâce à un catalyseur de reformage (en langue anglaise « steam methane reforming » ou SMR) ainsi que dans le cas de procédés couplant le reformage à la vapeur et l'oxydation partielle des hydrocarbures (procédé de reformage autothermique ou ATR). Dans ce cas, les hydrocarbures sont mélangés à de la vapeur, puis ils sont partiellement oxydés dans un brûleur produisant ainsi la chaleur nécessaire à la réaction de reformage en même temps qu'un gaz pauvre en hydrogène, ce premier gaz produit est ensuite reformé à la vapeur pour fournir davantage d'hydrogène et du monoxyde de carbone. Dans ces deux cas, le reformage à la vapeur est réalisé grâce à un catalyseur de reformage.

Les procédés de reformage à la vapeur ci-dessus sont utilisés pour produire des gaz de synthèse à partir des charges hydrocarbonées gazeuses, la réaction principale étant la réaction de reformage de méthane à la vapeur ; dans le cas de charges comprenant des hydrocarbures contenant au moins deux atomes de carbone, le reformage est précédé d'un pré-reformage, lui aussi à la vapeur dont la fonction essentielle est de transformer les hydrocarbures contenant au moins deux atomes de carbone en monoxyde de carbone, hydrogène et méthane. L'obtention de gaz de synthèse (appelé aussi syngas) représente généralement une première étape dans une production finale qui peut être une production d'hydrogène, de CO ou d'un mélange H₂/CO. En fonction de la charge à reformer, de la production finale recherchée et des conditions opératoires appliquées à cet effet, les gaz de synthèse peuvent présenter des compositions différentes, mais se présentent toujours sous la forme d'un mélange contenant principalement de l'hydrogène (H₂) et du monoxyde de carbone (CO) et en proportions moindres du dioxyde de carbone (CO₂), mais aussi du méthane (CH₄) n'ayant pas réagi, de la vapeur d'eau en excès et des traces de composés divers, impuretés initialement présentes mais aussi générées lors du reformage, et dues essentiellement à la présence du catalyseur.

Pour une production finale d'hydrogène essentiellement, le gaz de synthèse produit est ensuite traité dans au moins un réacteur où a lieu la réaction de conversion du CO, dit « réacteur de shift » dans lequel le monoxyde de carbone produit lors du reformage est, sous l'action de vapeur d'eau présente dans le gaz de synthèse et en présence d'un catalyseur approprié, essentiellement transformé en hydrogène supplémentaire et en dioxyde de carbone.

Un aspect essentiel des unités de production d'hydrogène est qu'elles présentent une intégration énergétique poussée permettant l'utilisation de la chaleur disponible dans les fluides chauds de l'unité, en particulier pour la production de vapeur, la préchauffe de réactifs ou la préchauffe d'air.

En effet, sortant du reformeur à très haute température comprise entre 800 et 950°C le gaz de synthèse doit être refroidi pour être ensuite transformé. C'est ainsi qu'il subit un premier refroidissement jusqu'à une température inférieure à 400°C avant de pouvoir entrer dans un réacteur de shift ; le gaz de synthèse en sortie de réacteur de shift (ou du dernier réacteur de shift) subit de nouveau un refroidissement jusqu'à une température comprise entre 20 et 60°C, adaptée au traitement aval par adsorption et la vapeur d'eau présente est partiellement condensée. Le gaz de synthèse saturé est séparé de la phase liquide résultant de la condensation qui constitue les « condensats de procédé ».

Ces condensats de procédé qui contiennent essentiellement de l'eau sont récupérés et réutilisés pour produire de la vapeur grâce à de la chaleur provenant du procédé. Toute ou partie de la vapeur ainsi produite, dite vapeur procédé, est mélangée avec la charge destinée à produire le gaz de synthèse dans le reformeur. Cependant, les condensats de procédé contiennent aussi des impuretés dissoutes dans l'eau, ces impuretés dissoutes étaient pour certaines présentes dans les flux alimentant le reformeur, d'autres ont été produites lors du reformage, elles proviennent cependant majoritairement de réactions dans le réacteur de shift, et sont imputables à la présence du catalyseur. Parmi les impuretés présentes dans les condensats de procédé, on trouve ainsi du dioxyde de carbone, du méthanol, de l'ammoniaque, des amines.

Ainsi qu'indiqué ci avant, en fonction du taux d'impuretés dans les condensats de procédé et des spécifications de qualité que la vapeur destinée à l'exportation doit respecter, plusieurs modes d'utilisation de ces condensats de procédé impurs sont possibles.

L'invention concerne plus particulièrement les procédés selon lesquels les condensats de procédé ne sont pas purifiés avant vaporisation. Ainsi, ils sont uniquement désaérés, pompés, préchauffés, vaporisés puis envoyés au moins en partie au point de mélange.

Un second aspect -essentiel lui-aussi- relatif aux installations de production d'hydrogène concerne la capture du CO₂ produit par ces installations. En effet, si dans les décennies précédentes, le dioxyde de carbone était simplement séparé de l'hydrogène et généralement envoyé à l'atmosphère, la mise en évidence du réchauffement climatique et du rôle qu'il y joue a conduit à assurer la capture du CO₂ produit conjointement avec l'hydrogène.

Une installation de production d'hydrogène à échelle industrielle représente une source importante d'émissions de CO₂, et en améliorer à la fois la conception et le fonctionnement dans le but de réduire les émissions de CO₂ d'origine humaine dans l'atmosphère est donc devenu critique pour les producteurs d'hydrogène. C'est pourquoi des procédés et des technologies ont été développés pour capturer le dioxyde de carbone afin à la fois de réduire les émissions de CO₂ et d'améliorer les installations de production d'hydrogène, en terme de coût et de performance.

Les émissions de dioxyde de carbone des installations de production d'hydrogène peuvent être réduites en utilisant plusieurs techniques de séparation différentes afin d'extraire le CO₂ contenu dans les fumées, le syngas ou les gaz résiduaires issus du procédé. Le CO₂ ainsi capturé peut par la suite être comprimé, transporté et séquestré dans des stockages souterrains, utilisé pour la récupération assistée du pétrole ou à des fins industrielles ou de consommation.

Les techniques mises au point pour la capture du dioxyde de carbone utilisent essentiellement les procédés cryogéniques, membranaires, d'adsorption ou d'absorption physique et/ou chimique ; le choix de la technologie dépend en particulier de la composition du gaz soumis à la capture, mais aussi des coûts de l'électricité, de la vapeur, des coûts d'investissement et des taxes (carbone) appliquées.

L'hydrogène est largement utilisé industriellement et notamment par l'industrie du pétrole et du raffinage pour différents procédés. Lors du reformage à la vapeur, la charge d'hydrocarbures est une charge gazeuse, en général du gaz naturel ou un mélange d'hydrocarbures légers dont le constituant principal est le méthane. Dans la suite de la description, dans un objectif de simplicité, on citera l'exemple du gaz naturel (GN). La charge d'alimentation subit en général un prétraitement destiné à éliminer les sulfures présents pour ne pas empoisonner les catalyseurs qui seront utilisés lors du reformage. La réaction de reformage fortement endothermique se produit à température et pression élevées (800 à 950°C et 13,5 à 55 bara). La chaleur nécessaire à la réaction de reformage du méthane est fournie:
- dans le cas d'un reformage de type reformage de méthane à la vapeur (SMR) par la combustion de gaz combustible - gaz naturel d'alimentation et gaz résiduaire du procédé (en général issu d'un gaz résiduaire de PSA) essentiellement - avec de l'air dans la zone de combustion produisant ainsi des fumées à température très élevée ;
- dans le cas d'un reformage auto thermique (ATR) par l'oxydation partielle de la charge d'alimentation -dans ce cas le gaz résiduaire de PSA est classiquement brûlé pour produire de la vapeur dans une chaudière dédiée.

Le syngas résultant du reformage est lui aussi très chaud, et une partie de la chaleur disponible est utilisée pour chauffer de l'eau de chaudière (appelée en langue anglaise waste heat boiler) afin de produire de la vapeur.

Le syngas refroidi une première fois peut être envoyé à un réacteur pour produire de l'hydrogène additionnel à partir de la conversion en présence d'eau du CO en CO₂. Ce réacteur est dit « réacteur de shift » (aussi identifié en tant que réacteur WGS, abréviation de l'expression anglaise water gas shift). Suite à cette étape du procédé, la teneur en CO₂ du syngas en aval du réacteur WGS augmente, conjointement avec sa teneur en H₂.

Le syngas enrichi en H₂ et CO₂ (et appauvri en CO) est le plus souvent traité par adsorption à pression modulée dans une unité PSA H₂ pour produire un flux gazeux d'hydrogène sensiblement pur.

En même temps que de l'hydrogène presque pur, l'unité PSA H₂ produit un résiduaire de PSA (PSA off gas en langue anglaise) qui contient le CO₂ contenu dans le gaz de synthèse alimentant l'unité PSA, ainsi que le méthane n'ayant pas réagi lors du reformage, du CO n'ayant pas réagi lors de l'étape de conversion et une partie de l'hydrogène alimentant l'unité PSA. En raison de la présence de gaz à forts pouvoirs calorifiques (méthane, monoxyde de carbone et hydrogène), le résiduaire de PSA est habituellement envoyé en tant que combustible vers les brûleurs du SMR ou de la chaudière dédiée dans le cas d'un ATR.

Le résiduaire de PSA est le courant gazeux le plus riche en CO₂ du procédé décrit ci-avant (typiquement 40-55% en l'absence de capture en amont) ; le résiduaire est disponible à une pression inférieure à 2bara. Grace à cette teneur relativement élevée en CO₂, la solution de la capture de CO₂ par voie cryogénique peut être appliquée au résiduaire de PSA.

La capture de CO₂ par voie cryogénique (CPU) fait appel à la condensation partielle et/ou à la distillation du CO₂ contenu dans le flux gazeux riche en CO₂ dans une unité de purification cryogénique (CPU pour « cryogenic purification unit » en langue anglaise). A noter que la condensation partielle s'effectuant sous pression, la littérature fait aussi référence à la dualité purification/compression en remplacement de la dualité purification/cryogénie pour la même abréviation CPU, et la même opération. Le gaz, après séchage et compression jusqu'à une pression comprise entre 20 et 100 bara, est refroidi jusqu'à une température proche de celle du point triple du CO₂ (environ -56°C). Dans ces conditions de température et de pression, il va se condenser partiellement, la phase liquide étant particulièrement enrichie en CO₂ et la phase gazeuse en gaz incondensables. Le liquide obtenu peut ensuite être distillé pour atteindre des puretés en CO₂ supérieures à 99%.

Un procédé de capture de CO₂ par CPU - appliqué au résiduaire du PSA - fonctionne selon le schéma suivant : le flux gazeux de résiduaire est comprimé et séché de sorte que sa pression soit comprise entre 20 et 100 bara environ, puis il subit une ou plusieurs étapes successives de condensation/séparation dans l'unité CPU pour produire un flux liquide enrichi en CO₂ et un flux gazeux (résiduaire de capture) enrichi en hydrogène et en autres constituants plus légers que le CO₂ et donc incondensables dans les conditions opératoires, notamment CH₄, H₂ et CO. Les étapes de condensation/séparation peuvent être complétées par des étapes de séparation membranaires.

Lors de l'étape de compression précédant l'étape de séchage, l'eau contenue dans le résiduaire gazeux va partiellement se condenser avec une partie des impuretés contenues dans le gaz solubles dans l'eau. La pression lors de l'étape de séchage est comprise entre 1 et 50 bara, la pression des condensats formés est par conséquent comprise entre 1 et 50 bara environ. Formés dans l'unité CPU, ils sont dans la description et dans les revendications désignés comme « condensats CPU ». Les condensats CPU sont séparés préalablement à la séparation/condensation du CO₂ et sont évacués en tant qu'eaux usées vers une station de traitement qui peut être une station de traitement des eaux usées du site industriel où est installée la CPU, mais sera plus souvent une station de traitement dédiée ; en l'absence de station de traitement des eaux usées disponible pour traiter ces condensats supplémentaires, ou si la station déjà présente n'est pas apte à traiter les condensats de la CPU en raison de leur . En particulier, la présence de méthanol dans les condensats de CPU est très gênante, car c'est un puissant bactéricide qui limite voire rend impossible un traitement par dégradation bactérienne communément utilisé pour le traitement des eaux usées. Une installation de traitement de ce type de condensats est relativement coûteuse car difficile à mettre en oeuvre, particulièrement du fait de la présence dans les condensats de méthanol.

Il est donc souhaitable d'employer une technique pour traiter ces condensats plus économique et surtout moins sensible à la teneur en méthanol. La solution selon l'invention consiste à intégrer le traitement des condensats en provenance de la CPU au procédé de production d'hydrogène ; plus précisément, il s'agira selon l'invention d'associer le traitement des condensats de CPU à celui des condensats de procédé issus du refroidissement du gaz de synthèse tel que décrit ci-avant.

Cette solution, intégrée au procédé, présente en outre des adaptations et des variantes avantageuses suivant les situations, c'est ainsi que :
- le nombre total d'équipements de traitement de condensats n'est pas augmenté - pas d'équipement pour le traitement des condensats de CPU avant évacuation- les couts d'investissement sont donc réduits ainsi que l'empreinte au sol de l'installation ;
- les condensats de la CPU étant recyclés vers la zone de reformage, on diminue d'autant l'appoint en eau déminéralisée requise par l'unité de production d'hydrogène ;
- les composés présents dans les condensats et pouvant être incorporées à la charge sont envoyés avec la vapeur au reformage. Ils sont alors éliminés et participent à la production d'hydrogène.

US2009/230359 montre un procédé et dispositif de production d'hydrogène avec récupération de dioxyde de carbone et production de vapeur.

Pour cela, l'invention a pour objet principal un procédé de production d'hydrogène par reformage d'hydrocarbures utilisant de la vapeur, associé à une capture de dioxyde de carbone et à une production de vapeur, comprenant au moins les étapes de
a) mélange des hydrocarbures à reformer avec de la vapeur pour produire la charge d'alimentation du reformage,
b) génération par reformage d'un gaz de synthèse comprenant essentiellement de l'hydrogène, du monoxyde de carbone ainsi que de la vapeur en excès, du dioxyde de carbone, du méthane résiduel, de l'eau et des impuretés à partir du mélange issu de l'étape a),
c) premier refroidissement du gaz de synthèse,
d) génération d'un gaz de synthèse enrichi en H₂ et CO₂ par conversion à la vapeur du CO contenu dans le gaz de synthèse refroidi issu de l'étape c),
e) refroidissement du gaz de synthèse enrichi en H₂ et CO₂ issu de l'étape d) par échange de chaleur indirect jusqu'à une température de l'ordre de la température ambiante, au moins inférieure à 60°C et de préférence inférieure ou égale à 40°C, de sorte à produire un gaz de synthèse saturé et des condensats C1,
f) séparation des condensats C1 d'avec le gaz de synthèse saturé issu de e),
g) traitement du gaz de synthèse issu directement ou indirectement de l'étape f) dans une unité de purification d'hydrogène par adsorption à pression modulée, de sorte à produire un courant d'hydrogène d'une pureté d'au moins 99 % et un courant résiduaire gazeux contenant au moins 40% de CO₂,
h) traitement du courant résiduaire gazeux de PSA issu de l'étape g) dans une unité CPU produisant au moins un courant de CO₂ purifié et au moins un courant d'incondensables,
ainsi que des étapes de traitement de tout ou partie des condensats C1 issus du procédé seuls ou en mélange avec de l'eau déminéralisée d'appoint, comprenant au moins les étapes de :
k1) détente des condensats C1 à une pression comprise entre 1 et 5 bara, de préférence entre 1 et 2 bara,
k2) passage des condensats C1 détendus dans un désaérateur afin d'éliminer une part des gaz dissous dans les condensats C1
k3) pompage des condensats C1 à une pression comprise entre 15 et 90 bara, de préférence entre 25 et 70 bara,
k4) préchauffage des condensats C1 sous pression à une température comprise entre 150 et 290°C, de préférence entre 200 et 280°C,
k5) vaporisation des condensats C1 sous pression à une température comprise entre 200 et 300°C, de préférence entre 220 et 290°C de sorte à produire un courant de vapeur impure,
k6) recyclage de la vapeur impure à l'étape a) pour être mélangée avec les hydrocarbures à reformer,
ainsi que des étapes production de vapeur destinée à l'exportation comprenant au moins les étapes de :
v1) alimentation d'un circuit de vapeur associé au procédé par de l'eau déminéralisée seule ou mélangée avec les condensats C1,
v2) préchauffage de l'eau,
v3) vaporisation de l'eau préchauffée contre le gaz de synthèse provenant du reformage dans une chaudière de récupération de chaleur de sorte à produire un courant de vapeur,
v4) recyclage d'une partie de la vapeur à l'étape a) pour être mélangée avec les hydrocarbures à reformer,
v5) mise à disposition de la vapeur restante pour l'exportation,
caractérisé en ce que l'étape de traitement h) produit en outre au moins un courant de condensats C2, et les condensats C2 sont récupérés et recyclés dans le procédé en amont de l'étape k5) de vaporisation des condensats C1.

De la sorte, les impuretés résiduelles présentes dans les condensats C2 de la CPU sont mélangées dans la vapeur avec celles des condensats C1 de procédé, et sont valorisées en tant que charge de reformage.

Conformément à d'autres caractéristiques avantageuses de l'invention, celle-ci peut présenter une ou plusieurs des variantes qui sont décrites ci-après.

En fonction de leur pression et de leur température, les condensats C2 issus de la CPU sont ajoutés aux condensats de procédé C1 en amont de la vaporisation des condensats, en différentes localisations, après avoir subi si besoin des étapes de chauffage et/ou de pompage et/ou de désaération, via les moyens de pompage, de chauffage ou de désaération des condensats C1 de procédé ou via des moyens dédiés. En effet, la pression des condensats C2 dépend de la pression du gaz traité par la CPU. C'est ainsi que, avantageusement :
- les condensats C2 peuvent être mélangés avec les condensats C1 en amont du désaérateur ; cette variante est utilisée de préférence lorsque les condensats C2 provenant de l'unité CPU sont à une pression supérieure ou égale à celle des condensats C1 avant le pompage de ces derniers mais inférieure à la pression opératoire de l'échangeur de préchauffe ou de vaporisation ; que les condensats C2 sont à une température suffisante pour le bon fonctionnement de l'unité; que le désaérateur, la pompe de condensats C1 et l'échangeur de préchauffe des condensats C1 sont en mesure de traiter le débit supplémentaire de condensats C2 et qu'il s'avère nécessaire de désaérer les condensats C2;
- les condensats C2 peuvent être pompés à la pression des condensats C1 après détente de ces derniers et mélangés avec les condensats C1 en amont du désaérateur ; cette variante est utilisée de préférence lorsque les condensats C2 provenant de l'unité CPU sont à une pression inférieure à celle des condensats C1 avant le pompage de ces derniers; que les condensats C2 sont à une température suffisante pour le bon fonctionnement de l'unité ; que le désaérateur, la pompe de condensats C1 et l'échangeur de préchauffe des condensats C1 sont en mesure de traiter le débit supplémentaire de condensats C2 et qu'il s'avère nécessaire de désaérer les condensats C2;
- les condensats C2 peuvent être préchauffés et mélangés avec les condensats C1 en amont du désaérateur ; cette variante est utilisée de préférence lorsque les condensats C2 provenant de l'unité CPU sont à une pression supérieure ou égale à celle des condensats C1 avant le pompage de ces derniers mais inférieure à la pression opératoire de l'échangeur de préchauffe ou de vaporisation; que le désaérateur, la pompe de condensats C1 et l'échangeur de préchauffe des condensats C1 sont en mesure de traiter le débit supplémentaire de condensats C2 ; qu'il s'avère nécessaire de désaérer les condensats C2 ; mais que la température des condensats C2 est trop faible pour assurer le bon fonctionnement de l'unité;
- les condensats C2 peuvent être pompés, préchauffés à la pression des condensats C1 après détente de ces derniers et mélangés avec les condensats C1 en amont du désaérateur ; cette variante est utilisée de préférence lorsque les condensats C2 provenant de l'unité CPU sont à une pression inférieure à celle des condensats C1 avant le pompage de ces derniers; que le désaérateur la pompe de condensats C1 et l'échangeur de préchauffe des condensats C1 sont en mesure de traiter le débit supplémentaire de condensats C2 ; qu'il s'avère nécessaire de désaérer les condensats C2 ; mais que la température des condensats C2 est trop faible pour assurer le bon fonctionnement de l'unité;
- les condensats C2 peuvent être mélangés avec les condensats C1 en aval du désaérateur ; cette variante est utilisée de préférence lorsque les condensats C2 provenant de l'unité CPU sont à une pression supérieure ou égale à celle des condensats C1 avant le pompage de ces derniers mais inférieure à la pression opératoire de l'échangeur de préchauffe ou de vaporisation ; que la pompe de condensats C1 et l'échangeur de préchauffe des condensats C1 sont en mesure de traiter le débit supplémentaire de condensats C2 et qu'il ne s'avère pas nécessaire de désaérer les condensats C2;
- les condensats C2 peuvent être pompés et mélangés avec les condensats C1 en aval du désaérateur ; cette variante est utilisée de préférence lorsque les condensats C2 provenant de l'unité CPU sont à une pression inférieure à celle des condensats C1 avant le pompage de ces derniers; que la pompe de condensats C1 et l'échangeur de préchauffe des condensats C1 sont en mesure de traiter le débit supplémentaire de condensats C2 et qu'il ne s'avère pas nécessaire de désaérer les condensats C2;
- les condensats C2 peuvent être mélangés avec les condensats C1 en aval de la pompe des condensats C1 ; cette variante est utilisée de préférence lorsque les condensats C2 provenant de l'unité CPU sont à une pression supérieure ou égale à celle des condensats C1 après le pompage de ces derniers; que l'échangeur de préchauffe des condensats C1 est en mesure de traiter le débit supplémentaire de condensats C2 et qu'il ne s'avère pas nécessaire de désaérer les condensats C2;
- les condensats C2 peuvent être pompés et mélangés avec les condensats C1 en aval de la pompe des condensats C1 ; cette variante est utilisée de préférence lorsque les condensats C2 provenant de l'unité CPU sont à une pression inférieure à celle des condensats C1 après le pompage de ces derniers; que l'échangeur de préchauffe des condensats C1 est en mesure de traiter le débit supplémentaire de condensats C2 et qu'il ne s'avère pas nécessaire de désaérer les condensats C2;
- les condensats C2 peuvent être mélangés avec les condensats C1 en aval de l'échangeur de préchauffe des condensats C1 ; cette variante est utilisée de préférence lorsque les condensats C2 provenant de l'unité CPU sont à une pression supérieure ou égale à celle des condensats C1 après le pompage de ces derniers; que les condensats C2 sont à une température suffisante pour le bon fonctionnement de l'unité et qu'il ne s'avère pas nécessaire de désaérer les condensats C2;
- les condensats C2 peuvent être pompés et mélangés avec les condensats C1 en aval de l'échangeur de préchauffe des condensats C1 ; cette variante est utilisée de préférence lorsque les condensats C2 provenant de l'unité CPU sont à une pression inférieure à celle des condensats C1 après le pompage de ces derniers; que les condensats C2 sont à une température suffisante pour le bon fonctionnement de l'unité et qu'il ne s'avère pas nécessaire de désaérer les condensats C2;
- les condensats C2 peuvent être préchauffés et mélangés avec les condensats C1 en aval de l'échangeur de préchauffe des condensats C1 ; cette variante est utilisée de préférence lorsque les condensats C2 provenant de l'unité CPU sont à une pression supérieure ou égale à celle des condensats C1 après le pompage de ces derniers; que les condensats C2 ne sont pas à une température suffisante pour le bon fonctionnement de l'unité et qu'il ne s'avère pas nécessaire de désaérer les condensats C2;
- les condensats C2 peuvent être pompés, préchauffés et mélangés avec les condensats C1 en aval de l'échangeur de préchauffe des condensats C1 ; cette variante est utilisée de préférence lorsque les condensats C2 provenant de l'unité CPU sont à une pression inférieure à celle des condensats C1 après le pompage de ces derniers; que les condensats C2 ne sont pas à une température suffisante pour le bon fonctionnement de l'unité et qu'il ne s'avère pas nécessaire de désaérer les condensats C2.

Selon une variante avantageuse du procédé, lorsqu'une colonne de lavage à l'eau - fonctionnant à une pression comprise entre 1 et 100 bara - est utilisée pour laver le courant résiduaire gazeux du PSA, on pourra récupérer en bas de cette colonne le liquide chargé en impuretés et le recycler avec les condensats C2 de la CPU dans le circuit de vaporisation des condensats C1. Cette étape de lavage à l'eau du résiduaire gazeux du PSA est ajoutée en particulier lorsqu'un abattement élevé du méthanol et de l'ammoniac est souhaitable dans la CPU.

Si l'on requiert une haute pureté sur la vapeur d'exportation, l'eau déminéralisée n'est pas mélangée en totalité avec les condensats C1 et C2, et la vapeur d'exportation est intégralement produite à partir d'eau déminéralisée dans un circuit dédié, tandis qu'au moins une partie de la vapeur destinée au point de mélange est produite dans un circuit distinct du circuit de vapeur haute pureté, à partir des condensats C1 et C2.

Si une basse pureté sur la vapeur d'exportation est suffisante, la totalité de l'eau déminéralisée est mélangée aux condensats C1 et C2, de sorte que la vapeur d'exportation comme la vapeur destinée au point de mélange soient produites à partir du mélange des condensats C1, des condensats C2 et de l'eau déminéralisée.

Selon au autre aspect de cette invention, celle-ci concerne une installation de production d'hydrogène par reformage d'hydrocarbures utilisant de la vapeur, associé à une capture de dioxyde de carbone et à une production de vapeur, comprenant au moins :
(i) des moyens de mélange des hydrocarbures à reformer avec de la vapeur pour produire la charge d'alimentation du reformage,
(ii) un reformeur pour le reformage d'un gaz de synthèse comprenant essentiellement de l'hydrogène, du monoxyde de carbone ainsi que de la vapeur en excès, du dioxyde de carbone, du méthane résiduel, de l'eau et des impuretés à partir du mélange issu de l'étape a),
(iii) au moins un échangeur de chaleur pour refroidir le gaz de synthèse,
(iv) au moins un réacteur de shift pour la conversion à la vapeur du CO contenu dans le gaz de synthèse refroidi issu de l'échangeur (iii),
(v) au moins un échangeur de chaleur pour le refroidissement du gaz de synthèse enrichi en H₂ et CO₂ produit par le réacteur de shift (iv) par échange de chaleur indirect jusqu'à une température de l'ordre de la température ambiante, au moins inférieure ou égale à 60°C, de préférence inférieure ou égale à 40°C de sorte à produire un gaz de synthèse saturé et des condensats C1,
(vi) un séparateur pour la séparation des condensats C1 d'avec le gaz de synthèse saturé issu de l'échangeur (v),
(vii) une unité de purification d'hydrogène par adsorption à pression modulée pour le traitement du gaz de synthèse issu directement ou indirectement de l'étape (vi) et la production d'un courant d'hydrogène d'une pureté d'au moins 99 % et un courant résiduaire gazeux contenant au moins 40% de CO₂,
(viii) une unité CPU pour le traitement du courant résiduaire gazeux de PSA produit par l'unité PSA (vii) et la production d'au moins un courant de CO₂ purifié et au moins un courant d'incondensables,
ainsi que des moyens de traitement de tout ou partie des condensats C1 issus du séparateur (vi) et comprenant au moins
(ix) une vanne de détente des condensats C1 à une pression comprise entre 1 et 5 bara, de préférence entre 1 et 2 bara,
(x) un désaérateur afin d'éliminer une part des gaz dissous dans les condensats C1
(xi) une pompe pour le pompage des condensats C1 à une pression comprise entre 15 et 90 bara, de préférence entre 25 et 70 bara,
(xii) un échangeur de chaleur pour le préchauffage des condensats C1 sous pression à un température comprise entre 150 et 290°C, de préférence entre 200 et 280°C.
(xiii) un échangeur de chaleur pour la vaporisation des condensats C1 sous pression à une température comprise entre 200 et 300°C, de préférence entre 220 et 290°C de sorte à produire un courant de vapeur impure,
(xiv) des moyens de recyclage de la vapeur impure à l'étape a) pour être mélangée avec les hydrocarbures à reformer,
ainsi que des moyens de production de vapeur destinée à l'exportation comprenant un circuit de production de vapeur, ainsi qu'au moins :
(xv) des moyens d'alimentation d'un circuit de vapeur associé au procédé par de l'eau déminéralisée seule ou mélangée avec les condensats C1,
(xvi) un échangeur de chaleur pour le préchauffage de l'eau,
(xvii) un échangeur de chaleur pour la vaporisation de l'eau préchauffée contre le gaz de synthèse provenant du reformage dans une chaudière de récupération de chaleur de préférence entre 220 et 280°C de sorte à produire un courant de vapeur, (xviii) des moyens de recyclage d'une partie de la vapeur à l'étape a) pour être mélangée avec les hydrocarbures à reformer,
(xix) des moyens de mise à disposition de vapeur pour l'exportation,
caractérisé en ce que l'unité CPU produisant en outre au moins un courant de condensats C2, l'installation comprend en outre des moyens de récupération et de recyclage des condensats C2 pour être traités conjointement avec les condensats C1.

Avantageusement, l'installation pour la production d'hydrogène par reformage d'hydrocarbures utilisant de la vapeur, pour la capture de dioxyde de carbone et pour la production de vapeur comprend aussi des moyens de mélange des condensats C2 avec les condensats C1 placés avant le désaérateur des condensats C1, ainsi que si besoin une pompe pour le pompage des condensats C2 préalablement à leur mélange avec les condensats C1.

Selon une autre variante, l'installation pour la production d'hydrogène par reformage d'hydrocarbures utilisant de la vapeur, pour la capture de dioxyde de carbone et pour la production de vapeur comprend des moyens de préchauffage des condensats C2, des moyens de mélange des condensats C2 préchauffés avec les condensats C1 placés avant le désaérateur des condensats C1, ainsi que si besoin une pompe pour le pompage des condensats C2 préalablement à leur préchauffage et leur mélange avec les condensats C1.

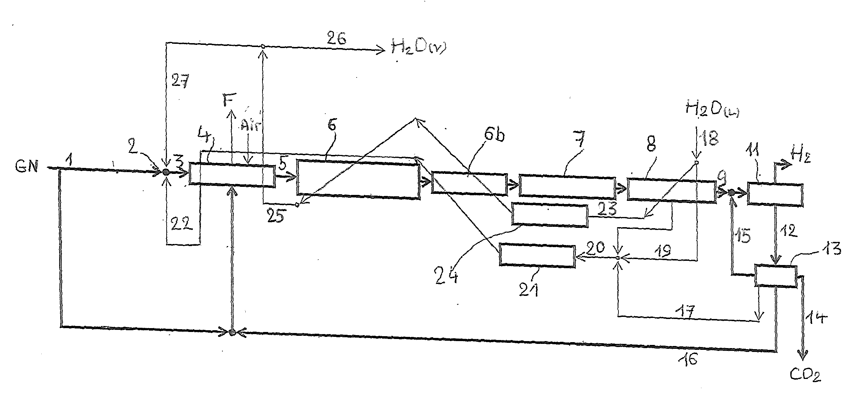

D'autres caractéristiques et avantages de l'invention apparaîtront à la lecture de la description qui va suivre. Un mode de réalisation de l'invention y est représenté sur la figure unique, et décrit ci-après à titre d'exemple non limitatif.

La figure présente ainsi un schéma d'un procédé de production d'hydrogène selon l'invention avec productions séparées de vapeurs de qualités distinctes dans deux circuits distincts.

Un flux **1** de gaz naturel (GN) est envoyé vers le point de mélange **2** pour y être mélangé avec deux flux de vapeur d'eau **22** et **27** produits dans le procédé. Le mode de production de ces deux flux de vapeur sera décrit par la suite. Le flux **3** résultant du mélange constitue la charge alimentant un module **4** de reformage de méthane à la vapeur (SMR), le gaz produit **5** est un gaz de synthèse comprenant essentiellement de l'hydrogène H₂ et du CO, mais aussi du CO₂, du CH₄, de l'eau et des impuretés ; le gaz **5** est refroidi par échange de chaleur avec de l'eau, d'abord dans la chaudière **6** de récupération de chaleur où l'eau est vaporisée puis via un module de refroidissement **6b** comprenant deux échangeurs de chaleur en parallèle puis alimente le module **7** de conversion, produisant ainsi un gaz de synthèse enrichi en H₂ et en CO₂ et appauvri en CO par rapport au gaz **5** produit par reformage, et contenant en outre des impuretés supplémentaires générées lors de la conversion -de l'ordre de 65 à 85% de H₂, 11 à 22% de CO₂, 0.5 à 6% de CO non converti et 3 à 10% de CH₄.

Le gaz de synthèse est alors refroidi en **8** par échange de chaleur contre de l'eau en particulier contre de l'eau déminéralisée **18** jusqu'à une température inférieure ou égale à 60°C plus généralement inférieure ou égale à 40°C, permettant la condensation partielle de l'eau présente dans le gaz de synthèse ainsi que de certaines impuretés condensables. Le gaz de synthèse saturé **9** est séparé de la fraction liquide **10** constituée des condensats C1 de procédé impurs (c'est-à-dire chargés en impuretés entrainées avec l'eau).

Le gaz de synthèse **9** est ensuite envoyé en **11** dans l'unité PSA H₂ laquelle produit au moins un courant gazeux d'hydrogène à haute pureté (supérieure à 99%), ainsi qu'un gaz résiduaire **12** qui contient quant à lui tout le dioxyde de carbone, la très grande majorité du méthane et du monoxyde de carbone non convertis, une grande partie de l'azote et de l'hydrogène dont la quantité dépend du rendement du PSA H₂.

Le gaz résiduaire **12** est envoyé en **13** à une unité CPU pour la séparation du CO₂, l'unité CPU produisant au moins un courant **14** de CO₂, un courant gazeux **15** riche en hydrogène H₂ qui est recyclé pour alimenter le PSA H₂ afin de valoriser l'hydrogène contenu et d'améliorer ainsi le rendement hydrogène global de l'installation, un courant **16** d'incondensables comprenant du méthane, de l'hydrogène, du monoxyde de carbone, du dioxyde de carbone non condensé, de l'azote et de l'eau, constituant le résiduaire de CPU qui est recyclé en tant que combustible de reformage vers le module de reformage **4,** ainsi qu'un courant liquide **17** constitué par les condensats C2 de CPU ; produits dans l'unité CPU, au moins en partie au stade de compression/ séchage qui précède la première étape de condensation du CO₂, ces condensats de CPU (condensats C2) contiennent majoritairement de l'eau ainsi que des impuretés dissoutes comme du méthanol, de l'ammoniaque, des amines. En application du procédé de l'invention, les condensats C2 sont recyclés pour être traités avec les condensats C1 de procédé.

Plus précisément, le courant **10** des condensats de procédé C1, le courant **17** des condensats C2 de CPU et un courant d'eau supplémentaire **19** prélevé sur l'apport extérieur d'eau déminéralisé **18** et chauffé par échange de chaleur avec le gaz de synthèse dans l'échangeur de chaleur **8** sont réunis pour former un courant **20** contenant de l'eau et les impuretés contenues dans les deux courants de condensats C1 et C2. Le courant résultant **20** est traité dans le désaérateur **21** puis chauffé par échange de chaleur contre le gaz de synthèse dans un des deux échangeurs de chaleur du module de refroidissement du gaz de synthèse **6b** et vaporisé contre les fumées **F** dans la zone de convection du module de reformage **4** formant ainsi le courant de vapeur impure **22.** Cette vapeur impure contenant les impuretés contenues dans les condensats C1 et C2 alimente le point de mélange **2.**

A côté de ce circuit de production de vapeur sale, le procédé de la figure met à disposition de la vapeur surchauffée de haute pureté pour les besoins propres du procédé et pour la production de vapeur d'exportation H₂O(v). Ce second circuit de production de vapeur, différencié du circuit de vapeur impure fonctionne de la manière suivante. La deuxième partie **23** d'eau prélevée sur l'apport extérieur d'eau déminéralisée **18,** est chauffée contre le gaz de synthèse dans l'échangeur **8,** traité dans le désaérateur **24** puis chauffé par échange de chaleur contre le gaz de synthèse dans le deuxième échangeur de chaleur du module **6b,** vaporisé dans la chaudière **6** formant ainsi le courant de vapeur **25.** Ce courant de vapeur de haute pureté traverse la zone de convection du reformeur où elle récupère un supplément de chaleur à partir des fumées **F,** elle est séparée en deux parties, l'une d'elles constitue la vapeur de haute pureté surchauffée d'export **26,** la seconde forme le flux de vapeur **27** envoyé au point de mélange **2.**

## Revendications

1. Procédé de production d'hydrogène par reformage d'hydrocarbures utilisant de la vapeur, associé à une capture de dioxyde de carbone et à une production de vapeur, comprenant au moins les étapes de
a) mélange des hydrocarbures à reformer avec de la vapeur pour produire la charge d'alimentation du reformage,
b) génération par reformage d'un gaz de synthèse comprenant essentiellement de l'hydrogène, du monoxyde de carbone ainsi que de la vapeur en excès, du dioxyde de carbone, du méthane résiduel, de l'eau et des impuretés à partir du mélange issu de l'étape a),
c) premier refroidissement du gaz de synthèse,
d) génération, par conversion à la vapeur du CO contenu dans le gaz de synthèse refroidi issu de l'étape c) d'un gaz de synthèse enrichi en H₂ et CO₂,
e) refroidissement du gaz de synthèse enrichi en H₂ et CO₂ issu de l'étape d) par échange de chaleur indirect jusqu'à une température de l'ordre de la température ambiante, au moins inférieure ou égale à 60°C, de préférence inférieure ou égale à 40°C de sorte à produire un gaz de synthèse saturé et des condensats C1,
f) séparation des condensats C1 d'avec le gaz de synthèse saturé issu de e),
g) traitement du gaz de synthèse issu directement ou indirectement de l'étape f) dans une unité de purification d'hydrogène par adsorption à pression modulée, de sorte à produire un courant d'hydrogène d'une pureté d'au moins 99 % et un courant résiduaire gazeux contenant au moins 40% de CO₂,
h) traitement du courant résiduaire gazeux de PSA issu de l'étape g) dans une unité CPU produisant au moins un courant de CO₂ purifié et au moins un courant d'incondensables,
ainsi que des étapes de traitement de tout ou partie des condensats C1 issus du procédé comprenant au moins les étapes de
k1) détente des condensats C1 à une pression comprise entre 1 et 5 bara, de préférence entre 1 et 2 bara,
k2) passage des condensats C1 dans un désaérateur afin d'éliminer une part des gaz dissous dans les condensats C1
k3) pompage des condensats C1 à une pression comprise entre 15 et 90 bara, de préférence entre 25 et 70 bara,
k4) préchauffage des condensats C1 sous pression à une température comprise entre 150 et 290°C, de préférence entre 200 et 280°C.
k5) vaporisation des condensats C1 sous pression à une température comprise entre 200 et 300°C, de préférence entre 220 et 290°C de sorte à produire un courant de vapeur impure,
k6) recyclage de la vapeur impure à l'étape a) pour être mélangée avec les hydrocarbures à reformer,
ainsi que des étapes production de vapeur de haute pureté destinée à l'exportation comprenant au moins les étapes de :
v1) alimentation d'un circuit de vapeur associé au procédé par de l'eau déminéralisée seule ou mélangée avec les condensats C1,
v2) préchauffage de l'eau,
v3) vaporisation de l'eau préchauffée contre le gaz de synthèse provenant du reformage dans une chaudière de récupération de chaleur de sorte à produire un courant de vapeur,
v4) recyclage d'une partie de la vapeur à l'étape a) pour être mélangée avec les hydrocarbures à reformer,
v5) mise à disposition de vapeur pour l'exportation,
**caractérisé en ce que** l'étape de traitement h) produit en outre au moins un courant de condensats C2, et les condensats C2 sont récupérés et recyclés dans le procédé en amont de l'étape k5) de vaporisation des condensats C1.

2. Procédé selon la revendication 1 dans lequel les condensats C2 -ayant été pompés préalablement si besoin- sont mélangés avec les condensats C1 avant la désaération des condensats C1,

3. Procédé selon la revendication 1 dans lequel les condensats C2 -ayant été pompés préalablement si besoin- sont préchauffés puis mélangés avec les condensats C1 avant la désaération des condensats C1,

4. Procédé selon la revendication 1 dans lequel les condensats C2 -ayant été pompés préalablement si besoin- sont mélangés avec les condensats C1 après la désaération mais avant le pompage des condensats C1,

5. Procédé selon la revendication 1 dans lequel les condensats C2 -ayant été pompés préalablement si besoin- sont mélangés avec les condensats C1 après la désaération et le pompage mais avant le préchauffage des condensats C1,

6. Procédé selon la revendication 1 dans lequel les condensats C2 -ayant été pompés préalablement si besoin- sont mélangés avec les condensats C1 après le préchauffage des condensats C1,

7. Procédé selon la revendication 1 dans lequel les condensats C2 -ayant été pompés préalablement si besoin- sont préchauffés puis mélangés avec les condensats C1 après le préchauffage des condensats C1,

8. Procédé selon l'une des revendications précédentes dans lequel un lavage à l'eau étant réalisé sur le courant résiduaire gazeux du PSA, le courant liquide chargé en impuretés produit est recyclé dans le procédé en amont de l'étape k5) de vaporisation des condensats C1,

9. Procédé selon l'une des revendications 1 à 8 dans lequel seule une partie de l'eau déminéralisée de l'étape v1) est mélangée avec les condensats C1.

10. Procédé selon l'une des revendications 1 à 8 dans lequel toute l'eau déminéralisée de l'étape v1) est mélangée avec les condensats C1.

11. Installation de production d'hydrogène par reformage d'hydrocarbures utilisant de la vapeur, associé à une capture de dioxyde de carbone et à une production de vapeur, comprenant au moins :
(i) des moyens de mélange des hydrocarbures à reformer avec de la vapeur pour produire la charge d'alimentation du reformage,
(ii) un reformeur pour le reformage d'un gaz de synthèse comprenant essentiellement de l'hydrogène, du monoxyde de carbone ainsi que de la vapeur en excès, du dioxyde de carbone, du méthane résiduel, de l'eau et des impuretés à partir du mélange issu de l'étape a),
(iii) au moins un échangeur de chaleur pour refroidir le gaz de synthèse,
(iv) au moins un réacteur de shift pour la conversion à la vapeur du CO contenu dans le gaz de synthèse refroidi issu de l'échangeur (iii),
(v) au moins un échangeur de chaleur pour le refroidissement du gaz de synthèse enrichi en H₂ et CO₂ produit par le réacteur de shift (iv) par échange de chaleur indirect jusqu'à une température de l'ordre de la température ambiante, au moins inférieure ou égale à 60°C, de préférence inférieure ou égale à 40°C de sorte à produire un gaz de synthèse saturé et des condensats C1,
(vi) un séparateur pour la séparation des condensats C1 d'avec le gaz de synthèse saturé issu de l'échangeur (v),
(vii) une unité de purification d'hydrogène par adsorption à pression modulée pour le traitement du gaz de synthèse issu directement ou indirectement de l'étape (vi) et la production d'un courant d'hydrogène d'une pureté d'au moins 99 % et un courant résiduaire gazeux contenant au moins 40% de CO₂,
(viii) une unité CPU pour le traitement du courant résiduaire gazeux de PSA produit par l'unité PSA (vii) et la production d'au moins un courant de CO₂ purifié et au moins un courant d'incondensables,
ainsi que des moyens de traitement de tout ou partie des condensats C1 issus du séparateur (vi) et comprenant au moins
(ix) une vanne de détente des condensats C1 à une pression comprise entre 1 et 5 bara, de préférence entre 1 et 2 bara,
(x) un désaérateur afin d'éliminer une part des gaz dissous dans les condensats C1
(xi) une pompe pour le pompage des condensats C1 à une pression comprise entre 15 et 90 bara, de préférence entre 25 et 70 bara,
(xii) un échangeur de chaleur pour le préchauffage des condensats C1 sous pression à une température comprise entre 150 et 290°C, de préférence entre 200 et 280°C.
(xiii) un échangeur de chaleur pour la vaporisation des condensats C1 sous pression à une température comprise entre 200 et 300°C, de préférence entre 220 et 290°C de sorte à produire un courant de vapeur impure,
(xiv) des moyens de recyclage de la vapeur impure à l'étape a) pour être mélangée avec les hydrocarbures à reformer,
ainsi que des moyens de production de vapeur destinée à l'exportation comprenant un circuit de production de vapeur, ainsi qu'au moins :
(xv) des moyens d'alimentation d'un circuit de vapeur associé au procédé par de l'eau déminéralisée seule ou mélangée avec les condensats C1,
(xvi) un échangeur de chaleur pour le préchauffage de l'eau,
(xvii) un échangeur de chaleur pour la vaporisation de l'eau préchauffée contre le gaz de synthèse provenant du reformage dans une chaudière de récupération de chaleur de sorte à produire un courant de vapeur,
(xviii) des moyens de recyclage d'une partie de la vapeur à l'étape a) pour être mélangée avec les hydrocarbures à reformer,
(xix) des moyens de mise à disposition de vapeur pour l'exportation,
**caractérisé en ce que** l'unité CPU produisant en outre au moins un courant de condensats C2, l'installation comprend aussi des moyens de récupération et de recyclage des condensats C2 pour être traités conjointement avec les condensats C1.

12. Installation selon la revendication 11 pour la production d'hydrogène par reformage d'hydrocarbures utilisant de la vapeur, la capture de dioxyde de carbone et la production de vapeur comprenant des moyens de mélange des condensats C2 avec les condensats C1 placés avant le désaérateur des condensats C1, ainsi que si besoin une pompe pour le pompage des condensats C2 préalablement à leur mélange avec les condensats C1.

13. Installation selon la revendication 11 pour la production d'hydrogène par reformage d'hydrocarbures utilisant de la vapeur, la capture de dioxyde de carbone et la production de vapeur comprenant des moyens de préchauffage des condensats C2, des moyens de mélange des condensats C2 préchauffés avec les condensats C1 placés avant le désaérateur des condensats C1, ainsi que si besoin une pompe pour le pompage des condensats C2 préalablement à leur préchauffage et leur mélange avec les condensats C1.

## Patentansprüche

1. Verfahren zur Erzeugung von Wasserstoff durch Kohlenwasserstoffreformierung unter Verwendung von Dampf, assoziiert mit einer Erfassung von Kohlendioxid und einer Erzeugung von Dampf, umfassend mindestens die folgenden Schritte:
a) Mischen der zu reformierenden Kohlenwasserstoffe mit Dampf, um das Rohmaterial der Reformierung zu erzeugen,
b) Erzeugen durch Reformierung eines Synthesegases, umfassend im Wesentlichen Wasserstoff, Kohlenmonoxid sowie überschüssigen Dampf, Kohlendioxid, Restmethan, Wasser und Verunreinigungen auf der Grundlage der Mischung, die aus Schritt a) stammt,
c) erstes Abkühlen des Synthesegases,
d) Erzeugen, durch Umwandlung des Dampfs von CO, das im abgekühlten Synthesegas enthalten ist, das aus Schritt c) stammt, eines mit H₂ und CO₂ angereicherten Synthesegases,
e) Abkühlen des mit H₂ und CO₂ angereicherten Synthesegases, das aus Schritt d) stammt, durch indirekten Wärmetausch bis zu einer Temperatur im Bereich der Umgebungstemperatur, mindestens weniger oder gleich 60 °C, vorzugsweise weniger oder gleich 40 °C, um ein gesättigtes Synthesegas und Kondensate C1 zu erzeugen,
f) Trennen der Kondensate C1 mit dem gesättigten Synthesegas, das aus e) stammt,
g) Behandeln des Synthesegases, das direkt oder indirekt aus Schritt f) stammt, in einer Einheit zur Reinigung von Wasserstoff durch Adsorption bei moduliertem Druck, um einen Wasserstoffstrom mit einer Reinheit von mindestens 99 % und einen gasförmigen Reststrom zu erzeugen, der mindestens 40 % CO₂ enthält,
h) Behandeln des gasförmigen Reststroms von PSA, der aus Schritt g) stammt, in einer CPU-Einheit, die mindestens einen gereinigten CO₂-Strom und mindestens einen Strom von nicht kondensierbaren Gasen erzeugt,
sowie Schritte zum Behandeln der Gesamtheit oder eines Teils der Kondensate C1, die aus dem Verfahren stammen, das mindestens die folgenden Schritte umfasst:
k1) Entspannung der Kondensate C1 bei einem Druck, der zwischen 1 und 5 bar, vorzugsweise zwischen 1 und 2 bar liegt,
k2) Führen der Kondensate C1 in einen Entgaser, um einen Teil der Gase zu beseitigen, die in den Kondensaten C1 gelöst sind
k3) Pumpen der Kondensate C1 bei einem Druck, der zwischen 15 und 90 bar, vorzugsweise zwischen 25 und 70 bar liegt,
k4) Vorerhitzen der Kondensate C1 unter Druck bei einer Temperatur, die zwischen 150 und 290 °C, vorzugsweise zwischen 200 und 280 °C liegt.
k5) Verdampfen der Kondensate C1 unter Druck bei einer Temperatur, die zwischen 200 und 300 °C, vorzugsweise zwischen 220 und 290 °C liegt, um einen unreinen Dampfstrom zu erzeugen,
k6) Recyclen des unreinen Dampfs in Schritt a), um mit den zu reformierenden Kohlenwasserstoffen gemischt zu werden,
sowie Schritte des Erzeugens von Dampf mit hoher Reinheit, der für den Export bestimmt ist, umfassend mindestens die folgenden Schritte:
v1) Versorgen eines Dampfkreislaufs, der mit dem Verfahren verbunden ist, durch entmineralisiertes Wasser alleine oder gemischt mit den Kondensaten C1,
v2) Vorerhitzen des Wassers,
v3) Verdampfen des vorerhitzten Wassers gegen das Synthesegas, das aus der Reformierung stammt, in einem Kessel zur Wiedergewinnung der Hitze, um einen Dampfstrom zu erzeugen,
v4) Recyclen eines Teils des Dampfs in Schritt a), um mit den zu reformierenden Kohlenwasserstoffen gemischt zu werden,
v5) Bereitstellen von Dampf für den Export,
**dadurch gekennzeichnet, dass** der Schritt des Behandelns h) außerdem mindestens einen Strom der Kondensate C2 erzeugt und die Kondensate C2 im Verfahren, das Schritt k5) zum Verdampfen der Kondensate C1 vorgelagert ist, wiedergewonnen und recycelt werden.

2. Verfahren nach Anspruch 1, wobei die Kondensate C2 - die zuvor bei Bedarf gepumpt wurden - mit den Kondensaten C1 vor der Entgasung der Kondensate C1 gemischt werden.

3. Verfahren nach Anspruch 1, wobei die Kondensate C2 - die zuvor bei Bedarf gepumpt wurden - vorerhitzt und dann mit den Kondensaten C1 vor der Entgasung der Kondensate C1 gemischt werden.

4. Verfahren nach Anspruch 1, wobei die Kondensate C2 - die zuvor bei Bedarf gepumpt wurden - mit den Kondensaten C1 nach der Entgasung, jedoch vor dem Pumpen der Kondensate C1 gemischt werden.

5. Verfahren nach Anspruch 1, wobei die Kondensate C2 - die zuvor bei Bedarf gepumpt wurden - mit den Kondensaten C1 nach der Entgasung und dem Pumpen, jedoch vor dem Vorerhitzen der Kondensate C1 gemischt werden.

6. Verfahren nach Anspruch 1, wobei die Kondensate C2 - die zuvor bei Bedarf gepumpt wurden - mit den Kondensaten C1 nach dem Vorerhitzen der Kondensate C1 gemischt werden.

7. Verfahren nach Anspruch 1, wobei die Kondensate C2 - die zuvor bei Bedarf gepumpt wurden - vorerhitzt und dann mit den Kondensaten C1 nach dem Vorerhitzen der Kondensate C1 gemischt werden.

8. Verfahren nach einem der vorhergehenden Ansprüche, wobei, nachdem eine Waschung mit dem Wasser auf dem gasförmigen Reststrom des PSA durchgeführt wurde, der erzeugte Flüssigkeitsstrom, geladen mit Verunreinigungen, im Verfahren, das Schritt k5) zum Verdampfen der Kondensate C1 vorgelagert ist, recycelt wird.

9. Verfahren nach einem der Ansprüche 1 bis 8, wobei nur ein Teil des entmineralisierten Wassers von Schritt v1) mit den Kondensaten C1 gemischt wird.

10. Verfahren nach einem der Ansprüche 1 bis 8, wobei das gesamte entmineralisierte Wasser von Schritt v1) mit den Kondensaten C1 gemischt wird.

11. Anlage zur Erzeugung von Wasserstoff durch Kohlenwasserstoffreformierung unter Verwendung von Dampf, assoziiert mit einer Erfassung von Kohlendioxid und mit einer Erzeugung von Dampf, umfassend mindestens:
(i) Mittel zur Mischung der zu reformierenden Kohlenwasserstoffe mit Dampf, um das Rohmaterial der Reformierung zu erzeugen,
(ii) einen Reformer zur Reformierung eines Synthesegases, umfassend hauptsächlich Wasserstoff, Kohlenmonoxid sowie überschüssigen Dampf, Kohlenstoffdioxid, Restmethan, Wasser und Verunreinigungen auf der Grundlage der Mischung, die aus Schritt a) stammt,
(iii) mindestens einen Wärmetauscher, um das Synthesegas abzukühlen,
(iv) mindestens einen Shift-Reaktor für die Umwandlung in den Dampf des CO, enthalten im abgekühlten Synthesegas, das aus dem Tauscher (iii) stammt,
(v) mindestens einen Wärmetauscher zur Abkühlung des mit H₂ und CO₂ angereicherten Synthesegases, erzeugt durch den Schift-Reaktor (iv) durch indirekten Wärmetausch bis zu einer Temperatur im Bereich der Umgebungstemperatur, mindestens weniger oder gleich 60 °C, vorzugsweise weniger oder gleich 40 °C, um ein gesättigtes Synthesegas und Kondensate C1 zu erzeugen,
(vi) einen Trenner zur Trennung der Kondensate C1 mit dem gesättigten Synthesegas, das aus dem Tauscher (v) stammt,
(vii) eine Einheit zur Reinigung von Wasserstoff durch Adsorption bei moduliertem Druck, zur Behandlung des Synthesegases, das direkt oder indirekt aus Schritt (vi) stammt, und Erzeugung eines Wasserstoffstroms mit einer Reinheit von mindestens 99 % und eines gasförmigen Reststroms, der mindestens 40 % CO₂ enthält,
(viii) eine CPU-Einheit zur Behandlung des gasförmigen Reststroms von PSA, erzeugt durch die PSA-Einheit (vii), und Erzeugung von mindestens einem gereinigten CO₂-Strom und mindestens einem Strom von nicht kondensierbaren Gasen,
sowie Mittel zur Behandlung der Gesamtheit oder eines Teils der Kondensate C1, die aus dem Trenner (vi) stammen und mindestens Folgendes umfassen:
(ix) ein Ventil zur Entspannung der Kondensate C1 bei einem Druck, der zwischen 1 und 5 bar, vorzugsweise zwischen 1 und 2 bar liegt,
(x) einen Entgaser, um einen Teil der Gase zu beseitigen, die in den Kondensaten C1 gelöst sind
(xi) eine Pumpe zum Pumpen der Kondensate C1 bei einem Druck, der zwischen 15 und 90 bar, vorzugsweise zwischen 25 und 70 bar liegt,
(xii) einen Wärmetauscher zur Vorerhitzung der Kondensate C1 unter Druck bei einer Temperatur, die zwischen 150 und 290 °C, vorzugsweise zwischen 200 und 280 °C liegt,
(xiii) einen Wärmetauscher zur Verdampfung der Kondensate C1 unter Druck bei einer Temperatur, die zwischen 200 und 300 °C, vorzugsweise zwischen 220 und 290 °C liegt, um einen unreinen Dampfstrom zu erzeugen,
(xiv) Mittel zum Recycling des unreinen Dampfs in Schritt a), um mit den zu reformierenden Kohlenwasserstoffen gemischt zu werden,
sowie Mittel zur Erzeugung von Dampf der für den Export bestimmt ist, umfassend einen Dampferzeugungskreislauf, sowie mindestens Folgendes:
(xv) Mittel zur Versorgung eines Dampfkreislaufs, der mit dem Verfahren assoziiert ist, durch entmineralisiertes Wasser alleine oder gemischt mit den Kondensaten C1,
(xvi) einem Wärmetauscher zur Vorerhitzung des Wassers,
(xvii) einen Wärmetauscher zur Verdampfung des vorerhitzten Wassers gegen das Synthesegas, das aus der Reformierung stammt, in einem Kessel zur Wiedergewinnung der Hitze, um einen Dampfstrom zu erzeugen,
(xviii) Mittel zum Recycling eines Teils des Dampfs in Schritt a), um mit den zu reformierenden Kohlenwasserstoffen gemischt zu werden,
(xix) Mittel zur Bereitstellung von Dampf für den Export,
**dadurch gekennzeichnet, dass**, da die CPU-Einheit außerdem mindestens einen Strom von Kondensaten C2 erzeugt, die Anlage auch Mittel zur Wiedergewinnung und zum Recycling der Kondensate C2 umfasst, um zusammen mit den Kondensaten C1 behandelt zu werden.

12. Anlage nach Anspruch 11 zur Herstellung von Wasserstoff durch Kohlenwasserstoffreformierung unter Verwendung von Dampf, wobei die Erfassung von Kohlendioxid und die Erzeugung von Dampf Mittel zur Mischung der Kondensate C2 mit den Kondensaten C1 umfassen, die vor dem Entgaser der Kondensate C1 angeordnet sind, ebenso wie, falls erforderlich, eine Pumpe zum Pumpen der Kondensate C2 vor ihrer Mischung mit den Kondensaten C1.

13. Anlage nach Anspruch 11 zur Erzeugung von Wasserstoff durch Kohlenwasserstoffreformierung unter Verwendung von Dampf, wobei die Erfassung von Kohlendioxid und die Erzeugung von Dampf Mittel zur Vorerhitzung der Kondensate C2, Mittel zur Mischung der vorerhitzten Kondensate C2 mit den Kondensaten C1, die vor dem Entgaser der Kondensate C1 angeordnet sind, ebenso wie, falls erforderlich, eine Pumpe umfassen, zum Pumpen der Kondensate C2 vor ihrer Vorerhitzung und ihrer Mischung mit den Kondensaten C1

## Claims

1. A process for producing hydrogen by reforming hydrocarbons using steam, combined with carbon dioxide capture and steam production, comprising at least the steps of
a) mixing the hydrocarbons to be reformed with steam so as to produce the feedstock for the reforming,
b) generating, by reforming, a synthesis gas comprising essentially hydrogen, carbon monoxide and also excess steam, carbon dioxide, residual methane, water and impurities from the mixture resulting from step a),
c) first cooling of the synthesis gas,
d) generating a synthesis gas enriched with H₂ and CO₂ by steam conversion of the CO contained in the cooled synthesis gas resulting from step c),
e) cooling the synthesis gas enriched with H₂ and CO₂ resulting from step d) by indirect heat exchange to a temperature of about ambient temperature, at least below or equal to 60°C and preferably below or equal to 40°C, so as to produce a saturated synthesis gas and condensates C1,
f) separating the condensates C1 from the saturated synthesis gas resulting from e),
g) treating the synthesis gas resulting directly or indirectly from step f) in a unit for hydrogen purification by pressure swing adsorption, so as to produce a stream of hydrogen having a purity of at least 99% and a stream of offgas containing at least 40% of CO₂,
h) treating the stream of PSA offgas resulting from step g) in a CPU unit producing at least one stream of purified CO₂ and at least one stream of non-condensables,
and also steps of treating all or part of the condensates C1 resulting from the process, comprising at least the steps of
k1) reducing the pressure of the condensates C1 to a pressure of between 1 or 5 bar(a), preferably between 1 and 2 bar(a),
k2) passing the condensates C1 through a deaerator in order to eliminate a part of the gases dissolved in the condensates C1,
k3) pumping the condensates C1 at a pressure of between 15 and 90 bar(a), preferably between 25 and 70 bar(a),
k4) preheating the condensates C1 under pressure at a temperature of between 150 and 290°C, preferably between 200 and 280°C,
k5) vaporizing the condensates C1 under pressure at a temperature of between 200 and 300°C, preferably between 220 and 290°C, so as to produce a stream of impure steam,
k6) recycling the impure steam to step a) so as to be mixed with the hydrocarbons to be reformed,
and also steps of producing highly pure steam intended for export, comprising at least the steps of:
v1) feeding a steam circuit associated with the process with demineralized water alone or mixed with the condensates C1,
v2) preheating the water,
v3) vaporizing the preheated water against the synthesis gas originating from the reforming in a waste heat boiler so as to produce a stream of steam,
v4) recycling a part of the steam to step a) so as to be mixed with the hydrocarbons to be reformed,
v5) making steam available for export, **characterized in that** the treatment step h) also produces at least one stream of condensates C2, and the condensates C2 are recovered and recycled into the process upstream of step k5) of vaporizing the condensates C1.

2. The process as claimed in claim 1, wherein the condensates C2 - having been previously pumped if required - are mixed with the condensates C1 before the deaeration of the condensates C1.

3. The process as claimed in claim 1, wherein the condensates C2 - having been previously pumped if required - are preheated and then mixed with the condensates C1 before the deaeration of the condensates C1.

4. The process as claimed in claim 1, wherein the condensates C2 - having been previously pumped if required - are mixed with the condensates C1 after the deaeration but before the pumping of the condensates C1.

5. The process as claimed in claim 1, wherein the condensates C2 - having been previously pumped if required - are mixed with the condensates C1 after the deaeration and the pumping but before the preheating of the condensates C1.

6. The process as claimed in claim 1, wherein the condensates C2 - having been previously pumped if required - are mixed with the condensates C1 after the preheating of the condensates C1.

7. The process as claimed in claim 1, wherein the condensates C2 - having been previously pumped if required - are preheated and then mixed with the condensates C1 after the preheating of the condensates C1.

8. The process as claimed in one of the preceding claims, wherein, since washing with water is carried out on the PSA offgas stream, the impurity-loaded liquid stream produced is recycled into the process upstream of step k5) of vaporizing the condensates C1.

9. The process as claimed in one of claims 1 to 8, wherein only a part of the demineralized water of step v1) is mixed with the condensates C1.

10. The process as claimed in one of claims 1 to 8, wherein all the demineralized water of step v1) is mixed with the condensates C1.

11. A facility for producing hydrogen by reforming hydrocarbons using steam, combined with carbon dioxide capture and steam production, comprising at least:
(i) means for mixing the hydrocarbons to be reformed with steam so as to produce the feedstock for the reforming,
(ii) a reformer for the reforming of a synthesis gas comprising essentially hydrogen, carbon monoxide and also excess steam, carbon dioxide, residual methane, water and impurities from the mixture resulting from step a),
(iii) at least one heat exchanger for cooling the synthesis gas,
(iv) at least one shift reactor for steam conversion of the CO contained in the cooled synthesis gas resulting from the exchanger (iii),
(v) at least one heat exchanger for cooling the synthesis gas enriched with H₂ and CO₂ produced by the shift reactor (iv) by indirect heat exchange to a temperature of about ambient temperature, at least below or equal to 60°C, preferably below or equal to 40°C, so as to produce a saturated synthesis gas and condensates C1,
(vi) a separator for separating the condensates C1 from the saturated synthesis gas resulting from the exchanger (v),
(vii) a unit for hydrogen purification by pressure swing adsorption for treating the synthesis gas resulting directly or indirectly from step (vi) and producing a stream of hydrogen having a purity of at least 99% and a stream of offgas containing at least 40% of CO₂,
(viii) a CPU unit for treating the PSA offgas stream produced by the PSA unit (vii) and producing at least one stream of purified CO₂ and at least one stream of non-condensables,
and also means for treating all or part of the condensates C1 from the separator (vi) and comprising at least
(ix) a valve for reducing the pressure of the condensates C1 to a pressure of between 1 and 5 bar(a), preferably between 1 and 2 bar(a),
(x) a deaerator in order to eliminate a part of the gases dissolved in the condensates C1,
(xi) a pump for pumping the condensates C1 at a pressure of between 15 and 90 bar(a), preferably between 25 and 70 bar(a),
(xii) a heat exchanger for preheating the condensates C1 under pressure at a temperature of between 150 and 290°C, preferably between 200 and 280°C,
(xiii) a heat exchanger for vaporizing the condensates C1 under pressure at a temperature of between 200 and 300°C, preferably between 220 and 290°C, so as to produce a stream of impure steam,
(xiv) means for recycling the impure steam to step a) so as to be mixed with the hydrocarbons to be reformed,
and also means for producing steam intended for export, comprising a steam production circuit, and also at least:
(xv) means for feeding a circuit of steam associated with the process with demineralized water alone or mixed with the condensates C1,
(xvi) a heat exchanger for preheating the water,
(xvii) a heat exchanger for vaporizing the preheated water against the synthesis gas originating from the reforming in a waste heat boiler so as to produce a stream of steam,
(xviii) means for recycling a part of the steam to step a) so as to be mixed with the hydrocarbons to be reformed,
(xix) means for making steam available for export, **characterized in that**, since the CPU unit also produces at least one stream of condensates C2, the facility also comprises means for recovering and recycling the condensates C2 so as to be treated together with condensates C1.

12. The facility as claimed in claim 11 for producing hydrogen by reforming hydrocarbons using steam, capturing carbon dioxide and producing steam, comprising means for mixing the condensates C2 with the condensates C1 placed before the deaerator of the condensates C1, and also, if required, a pump for pumping the condensates C2 prior to the mixing thereof with the condensates C1.

13. The facility as claimed in claim 11 for producing hydrogen by reforming hydrocarbons using steam, capturing carbon dioxide and producing steam, comprising means for preheating the condensates C2, means for mixing the preheated condensates C2 with the condensates C1 placed before the deaerator of the condensates C1, and also, if required, a pump for pumping the condensates C2 prior to the preheating thereof and the mixing thereof with the condensates C1.
